Europäisches Patentamt

European Patent Office

Office européen des brevets

(19)

(11) Veröffentlichungsnummer : **0 164 576**
**B1**

(12) **EUROPÄISCHE PATENTSCHRIFT**

(45) Veröffentlichungstag der Patentschrift :
**11.01.89**

(51) Int. Cl.⁴ : **F 23 C   7/06**, F 23 L 15/04,
**F 23 C   3/00**

(21) Anmeldenummer : **85105682.0**

(22) Anmeldetag : **09.05.85**

(54) **Industriebrenner für gasförmige oder flüssige Brennstoffe.**

(30) Priorität : **15.06.84 DE 3422229**

(43) Veröffentlichungstag der Anmeldung :
**18.12.85 Patentblatt 85/51**

(45) Bekanntmachung des Hinweises auf die Patenterteilung : **11.01.89 Patentblatt 89/02**

(84) Benannte Vertragsstaaten :
**AT DE FR GB IT**

(56) Entgegenhaltungen :
**EP--A-- 0 029 939**
**EP--A-- 0 039 762**
**DE--A-- 2 243 604**
**FR--A-- 2 336 554**
**US--A-- 3 101 773**
**US--A-- 4 351 632**

(73) Patentinhaber : **WS Wärmeprozesstechnik GmbH**
**Dornierstrasse 14**
**D-7253 Renningen 1 (DE)**

(72) Erfinder : **Wünning, Joachim, Dr.-Ing.**
**Berghalde 20**
**D-7250 Leonberg (DE)**

(74) Vertreter : **Rüger, Rudolf, Dr.-Ing. et al**
**Webergasse 3 Postfach 348**
**D-7300 Esslingen/Neckar (DE)**

**Beschreibung**

Die Erfindung betrifft einen Industriebrenner für gasförmige oder flüssige Brennstoffe, insbesondere zur Beheizung von Ofenräumen von Industrieöfen, mit einer keramischen Brennkammer, die mit einer Brennstoff- und einer Primärluftzuführung versehen und zur unvollständigen Verbrennung des Brennstoffes mit der Primärluft eingerichtet sowie mit einem düsenförmig eingeschnürten Auslaß für die mit hoher Geschwindigkeit austretenden Gase ausgebildet ist und mit einer die Brennkammer umgebenden, die zur Restverbrennung erforderliche vorgewärmte Restluftmenge führenden Restluftkammer, aus deren rings um den Brennkammerauslaß angeordneten Düsenöffnungen Restluftstrahlen mit hoher Geschwindigkeit austreten.

Es ist bekannt (DE-PS 21 29 357), bei einer Brennvorrichtung für gasförmigen Brennstoff die in den Verbrennungsgasen enthaltene Stickoxidmenge durch Verringerung der Flammentemperatur herabzusetzen. Zu diesem Zwecke arbeitet die Brennvorrichtung mit einem Primärbrennraum, in welchem der Brennstoff unvollständig verbrannt wird und mit einem dem Primärbrennraum nachgeordneten Sekundärbrennraum, in welchem die Verbrennung mit dem Rest der theoretisch erforderlichen Luftmenge vervollständigt wird. Der Primärbrennraum ist dabei zur Verbrennung von 60 bis 90 % des Brennstoffs zusammen mit der für eine vollständige Verbrennung insgesamt theoretisch erforderlichen Luftmenge als Brennkammer mit einem düsenartig eingeschnürten Auslaß ausgebildet, an den sich die Ofenkammer anschließt, wobei stromabwärts von dem Auslaß der Brennkammer mit Abstand von diesem ein den Sekundärbrennraum im wesentlichen bildendes Abzugsrohr angeordnet ist, das in Strömungsrichtung divergiert. Die Brennkammer selbst kann dabei von einem den Rest der theoretisch erforderlichen Luftmenge führenden Nebenluftkanal umgeben sein, der in der Nähe des Auslasses der Brennkammer offen ist.

Von den aus dem Brennkammerauslaß mit hoher Geschwindigkeit austretenden, teilweise verbrannten Verbrennungsgasen werden die in der Ofenkammer enthaltenen relativ kühlen Abgase angesaugt und in das Abzugsrohr mitgerissen. Dadurch soll eine Zwischenkühlung der Verbrennungsgase vor ihrer in dem Abzugsrohr und in der Ofenkammer erfolgenden restlosen Verbrennung zusammen mit einer starken Umwälzung der in der Ofenkammer befindlichen restlos verbrannten Gase erreicht werden.

Ein solches im Abstand von der Brennkammer angeordnetes Abzugsrohr, das bei dieser Brennvorrichtung deshalb unerläßlich ist, um eine vollständige Sekundärverbrennung mit entsprechend niedrigen Gehalten an CO zu erreichen, ist in dem Ofenraum häufig nur schwierig anzubringen. Davon abgesehen arbeitet die bekannte Brennvorrichtung ohne Luftvorwärmung, die schon wegen der beschränkten Temperaturbeständigkeit der metallischen Brennkammer nicht möglich wäre. Durch die Luftvorwärmung wird nämlich die Flammentemperatur wesentlich erhöht, womit aber auch der Stickoxidanteil (NOx) im Abgas wesentlich steigt. Mit Rücksicht auf eine Energieersparnis wäre aber eine Betrieb eines solchen schadstoffarmen Hochleistungsbrenners mit möglichst hoher Luftvorwärmung erwünscht.

Grundsätzlich Ähnliches gilt auch für einen aus der US-A-4351 632 bekannten Brenner für gasförmige oder flüssige Brennstoffe, der eine Brennkammer aufweist, die mit einer Brennstoff- und einer Primärluftzuführung versehen und zur unvollständigen Verbrennung des Brennstoffs mit der Primärluft eingerichtet ist. Dabei ist eine die Brennkammer umgebende, die zur Restverbrennung erforderliche Restluftmenge führende Restluftkammer vorgesehen, aus deren rings um den Auslaß der Brennkammer angeordneten Düsenöffnungen Restluftstrahlen mit hoher Geschwindigkeit austreten. Eine zu der Brennkammer koaxiale, zylindrische Wand eines Luftverteilerkastens ist über einen Teil der axialen Länge der Brennkammer vorgezogen, derart, daß durch diese Wand, gemeinsam mit der Seitenwand der Brennkammer, die Restluftkammer seitlich begrenzt ist. Bei diesem Brenner sind die Düsenöffnungen für die Restluftstrahlen unmittelbar in der mit Restluftkanälen versehenen Wand der Brennkammer ausgebildet, in deren Restluftkanälen gegebenenfalls verstellbare Luftleitelemente angeordnet sein können. Dies ergibt einen verhältnismäßig komplizierten Aufbau, wobei zusätzliche Probleme hinsichtlich der Halterung und der Verbindung der Brennkammer mit der zylindrischen Wand auftreten.

Bei einem anderen aus der AT-PS 238 865 bekannten sogenannten Umwälzbrenner, der ebenfalls mit einer zweistufigen Verbrennung arbeitet, ist eine feuerfest ausgemauerte Brennkammer vorgesehen, in der die Temperatur durch beschränkte Luft- oder Gaszufuhr unterhalb der für das feuerfeste Mauerwerk zulässigen Grenze gehalten wird. Die vollständige Verbrennung erfolgt in dem aus der Brennkammer austretenden Brennerstrahl durch Zuführung der Restluft- oder Gasmenge zum Brennerstrahl. Praktisch geschieht dies in der Weise, daß die Brennkammer von einer die Restluftmenge führenden ringförmigen Restluftkammer umschlossen ist, die die den Brennkammerauslaß umgebenden Düsenöffnungen aufweist, die vorzugsweise leicht schräg zu der Achse der Austrittsöffnung der Brennkammern liegen. Durch diese konzentrische Anordnung der Restluftkammer und der Brennkammer wird zwar eine Vorwärmung der Restluftmenge durch den über die Wandung der Brennkammer erfolgenden Wärmeaustausch erreicht, doch arbeitet der Brenner ohne Primärluftvorwärmung. Auch geht es bei diesem Brenner nicht darum, den Schadstoffgehalt der Abgase möglichst niedrig zu halten ; es soll vielmehr die in der Brennkammer selbst herrschende Temperatur unterhalb der Grenze der Temperaturbeständigkeit der Ausmauerung der Brennkammer gehalten werden. Die Sekundärverbrennungstemperatur spielt in diesem Zusammenhang keine Rolle.

Ausgehend von diesem Stand der Technik liegt der Erfindung die Aufgabe zugrunde, einen schadstoffarmen Industriebrenner, d. h. einen Industriebrenner mit geringem Anteil, insbesondere an CO und NOx in den Abgasen zu schaffen, der sich durch einen einfachen Aufbau auszeichnet und auch bei hoher Luftvorwärmung betriebssicher arbeitet.

Zur Lösung dieser Aufgabe ist der eingangs genannte Industriebrenner erfindungsgemäß dadurch gekennzeichnet, daß eine zu der Brennkammer koaxiale zylindrische Wand über wenigstens einen Teil der axialen Länge der Brennkammer vorgezogen ist, die durch sie gemeinsam mit der Außenwand der Brennkammer seitlich begrenzt ist, daß die Restluftkammer stirnseitig durch einen mit der zylindrischen Wand verbundenen ringförmigen Düsenträger abgeschlossen ist, gegen den die Brennkammer außen stirnseitig abgestützt ist und in dem die Düsenöffnungen für die Restluftstrahlen angeordnet sind, und daß die Brennkammer in Achsrichtung gegen den Düsenträger mit einer elastischen Kraft verspannt ist.

Dabei kann die Anordnung derart getroffen sein, daß die zylindrische Wand Teil eines rohrförmigen Rekuperators ist, der zwei im Gegenstrom von Verbrennungsabgasen und der Verbrennungsluft durchströmte koaxiale Ringkammern aufweist, die durch die wärmetauschende zylindrische Wand voneinander getrennt sind.

Der Rekuperator gestattet es, einen Luftvorwärmgrad, und zwar sowohl für die Primär- als auch für die Restluft, über 50 % zu erzielen und auch bei Prozeßtemperaturen bis 1 300 °C, wie sie beispielsweise beim Schmieden von Stahl, in Glaswannen und keramischen Öfen auftreten, den NOx-Anteil im Abgas in den Bereich unter 200 bis 300 ppm (parts per million) abzusenken.

Der Industriebrenner zeichnet sich durch hohe Betriebssicherheit bei einfachem kompaktem Aufbau aus.

Der Düsenträger kann grundsätzlich als ein getrenntes Teil hergestellt sein, das mit der zylindrischen Wand des Rekuperators verbunden ist. Besonders einfache konstruktive Verhältnisse ergeben sich aber, wenn der Düsenträger durch ein eingezogenes Endteil der zylindrischen Wand gebildet ist, das stirnseitig gegen die Brennkammer abgestützt ist. Die aus hitzebeständigem Stahl bestehende zylindrische Wand des Rekuperators hat einen größeren Ausdehnungskoeffizienten als das keramische Material der Brennkammer. Durch die gegebenenfalls abdichtende Abstützung des eingezogenen Endteiles gegen die Brennkammer wird das Auftreten übermäßiger Spannungen im Dichtungsbereich verhindert, was sowohl die Lebensdauer als auch die Betriebssicherheit des Brenners günstig beeinflußt.

Die Brennkammer ist in Achsrichtung gegen den sie randseitig untergreifenden — gegebenenfalls durch das eingezogene Endteil der zylindrischen Wand gebildeten — Düsenträger mit elastischer Kraft verspannt. Daher werden von den unterschiedlichen Ausdehnungskoeffizienten des Düsenträgers bzw. der zylindrischen Wand und der Brennkammer herrührende Längenunterschiede an der Abstützungsstelle selbsttätig ausgeglichen, ohne daß die Dichtwirkung beeinträchtigt würde.

Praktisch kann dies derart verwirklicht sein, daß die Brennkammer über ein auf ihr abgestütztes Brennstoffzufuhrrohr gegen den Düsenträger angepreßt ist und das Brennstoffzufuhrrohr durch ein elastisches Glied in Achsrichtung belastet ist.

Die Brennkammer weist mit Vorteil eine im wesentlichen flache, den Auslaß enthaltende Stirnwand auf, die sich an eine zylindrische Seitenwand anschließt. Durch Beobachtung der im Betrieb auftretenden Glühfarbe wurde nämlich festgestellt, daß dei dieser Ausbildung der Brennkammern im Inneren ein Strömungsschatten in dem Bereich entsteht, wo die zylindrische Seitenwand in die Stirnfläche übergeht. Damit ist die Temperaturbelastung an dieser an sich gefährdeten Stelle geringer. Dies kann zugleich dazu ausgenützt werden, daß die Brennkammer in diesem Bereiche des Überganges von der zylindrischen Seitenwand zur Stirnwand abgedichtet gegen den Düsenträger abgestützt ist.

Die Brennkammer selbst kann mit Vorteil als ein einstückiges, aus dünnwandiger Hochtemperaturkeramik bestehendes Teil ausgebildet sein, des vorzugsweise austauschbar in dem Brenner eingesetzt ist.

Eine solche Brennkammer kann auch der extremen Temperaturbelastung bei hoher Luftvorwärmung standhalten, wobei wegen der erwähnten konstruktiven Maßnahmen auch ihre Abdichtung gegen den Düsenring einwandfrei ist.

Um die NOx-Gehalte auch bei der verwendeten hohen Luftvorwärmung niedrig zu halten und unzulässige CO-Gehalte als Folge unvollständiger Sekundärverbrennung, insbesondere im Niedertemperaturbereich, zu vermeiden, arbeitet der neue Brenner mit einer hohen Luftgeschwindigkeit. Ihm liegt die Überlegung zugrunde, daß sowohl der aus dem Brennkammerauslaß austretende Primärverbrennungsgasstrahl als auch die aus den Düsenöffnungen des Düsenträgers kommenden Sekundärluftstrahlen vor der Vereinigung kühles Abgas aus der Ofenkammer ansaugen, um damit die Temperatur in der Rest- oder Sekundärverbrennungszone abzusenken. Dazu muß die Geschwindigkeit in den Restluftstrahlen so hoch sein, daß diese nicht sofort durch den von dem Hauptstrahl ausgehenden Sog zu diesem hin abgelenkt werden. Die Strahlachsen der Restluftstrahlen sollen entweder parallel oder etwas zu dem Hauptstrahl hin geneigt verlaufen, wenn der Brenner als normaler Strahlbrenner betrieben wird.

Um eine vollständige Ausnutzung des für die Primärverbrennung benötigten Brennkammerdruckes zu erzielen, kann die Anordnung konstruktiv derart getroffen sein, daß der Rekuperator einen innerhalb der zylindrischen Wand angeordneten Luftleitzylinder aufweist, der stirnseitig im axialen Abstand von der Brennkammer endet. Da der Luftleitzylinder keine Drosselorgane enthält, sind sowohl die Brennkammer als auch die diese umgebende Restluftkammer mit dem vollen Druck der zugeführten Primärluft beaufschlagt. Das Drennstoffzufuhrrohr kann an dem dem Auslaß gegenüberliegenden Boden der

3

Brennkammer abgestützt sein, welcher um deren Längsachse herum gleichmäßig verteilt angeordnete Primärlufteinlaßöffnungen aufweist, deren Gesamtdurchtrittsfläche wesentlich größer ist als die Gesamtdurchtrittsfläche des Auslasses.

Um die Ansaugung des Ofengases auf noch kürzerem Wege bei intensiverer Durchmischung mit dem Ofengas zu erzielen, kann der Auslaß der Brennkammer durch eine Anzahl gleichmäßig verteilt angeordneter Auslaßöffnungen gebildet sein. Dabei hat es sich herausgestellt, daß der definierte Abstand der Restluftaustritts zu dem gegebenenfalls aufgeteilten Hauptstrahl von Bedeutung ist. In aus einer Düsenöffnung austretenden Gasstrahlen verdoppeln sich nämlich schon im Abstand weniger Düsendurchmesser die Massenströme. Dies bedeutet für den vorliegenden Brenner, daß damit die Brennstoffenergie in der Restoder Sekundärverbrennungszone bei einer solchen Verdoppelung der Massenströme nur noch die halbe Temperatursteigerung hervorrufen kann. Bei einem zu großen Abstand des Restluftaustritts entsteht CO durch unvollständige Verbrennung, insbesondere bei niedrigen Ofentemperaturen.

Besonders günstige Verhältnisse ergeben sich, wie die praktische Erfahrung gezeigt hat, wenn der kleinste Randabstand benachbarter Auslaßöffnungen der Brennkammer größer als die lichte Weite dieser Öffnungen ist. Die Auslaßöffnungen der Brennkammer und die Düsenöffnungen der Restluftkammer liegen mit ihren Mittelpunkten mit Vorteil auf konzentrischen Kreisen, wobei der kleinste Randabstand einer Düsenöffnung zu der benachbarten Auslaßöffnung größer als das Dreifache der lichten Weite der Düsenöffnung beträgt. Die Auslaßöffnungen und die Düsenöffnungen sind jeweils gegeneinander versetzt symmetrisch zueinander angeordnet.

Die Auslaßöffnungen können im übrigen in einer Keramikplatte ausgebildet sein, die zentrisch in die Brennkammer eingesetzt ist. Auf diese Weise kann eine vorhandene Brennkammer durch einfachen Austausch dieser Keramikplatten auf verschiedene Einsatzbedingungen umgerüstet werden, während andererseits die einer hohen Temperaturbelastung ausgesetzte, die Auslaßöffnungen aufweisende Keramikplatte randseitig gegenüber der Brennkammer etwas beweglich ist, so daß von örtlich unterschiedlichen Temperaturen herrührende Spannungen vermieden werden.

Bei einem Strahlbrenner sind die Auslaßöffnungen der Brennkammer und die Düsenöffnungen der Restluftkammer jeweils im wesentlichen achsparallel zueinander angeordnet. Der neue Brenner kann aber auch als sogenannter Wandstrahlbrenner ausgebildet werden, wobei dann die Auslaßöffnungen radial schräg nach außen weisend ausgerichtet sind, während die Düsenöffnungen mit ihren Achsen quer zu den Achsen der Auslaßöffnungen verlaufend angeordnet sind.

Um in der Nähe der thermisch hochbelasteten Düsenöffnungen der Restluftkammer und der Abdichtungsstelle der Restluftkammer gegen die Brennkammer die Temperaturbelastung zu senken, kann es vorteilhaft sein, wenn in der Restluftkammer nahe dem Düsenträger eine eigene Kühleinrichtung, beispielsweise in Gestalt eines von Kühlluft durchströmten Kühlluftkanales angeordnet sein. Aus ähnlichen Gründen kann der Brenner auch ein wenigstens den Düsenträger stirnseitig abdeckendes keramisches Strahlungsschild aufweisen, das mit Öffnungen zum Durchtritt der Restluftstrahlen versehen ist und das gegebenenfalls auch einen die Restluftkammerwandung in einem vorbestimmten Bereich seitlich abdeckenden zylindrischen Wandungsteil aufweisen kann.

In der Zeichnung sind Ausführungsbeispiele des Gegenstandes der Erfindung dargestellt. Es zeigen :

Fig. 1 einen Industriebrenner gemäß der Erfindung in der Ausbildung als Strahlbrenner, im axialen Schnitt in einer schematischen Seitenansicht,

Fig. 2 den Strahlbrenner nach Fig. 1 in einer abgewandelten Ausführungsform und in einer entsprechenden Darstellung,

Fig. 3 den Strahlbrenner nach Fig. 2 in einer Draufsicht auf seine auslaßseitige Stirnseite, in schematischer Darstellung unter Veranschaulichung der Düsenanordnung,

Fig. 4 den Industriebrenner nach Fig. 1 in einer abgewandelten Ausführungsform in der Ausführung als Wandstrahlbrenner, im Ausschnitt sowie im axialen Schnitt und in einer schematischen Seitenansicht und

Fig. 5 die Düsenanordnung des Brenners nach Fig. 4 in einer Darstellung entsprechend Fig. 3.

Der in den Figuren in mehreren Ausführungsformen dargestellte Industriebrenner ist zur Beheizung mit gasförmigen oder flüssigen Brennstoffen eingerichtet und dient zur Beheizung des Ofenraumes 1 eines Industrieofens, dessen Wandung bei 2 dargestellt ist und eine durchgehende Öffnung 3 enthält, in die der Brenner eingesetzt ist.

Der Brenner selbst weist ein aus Stahl bestehendes zylindrisches Mantelrohr 4 auf, das von einer Wärmeisolationsschicht 5 umgeben ist und in das in dem Bereich außerhalb der Ofenkammerwandung 2 ein Luftzufuhrrohr 6 seitlich mündet. In das Mantelrohr 4 ist ein koaxialer, ebenfalls aus Stahl bestehender Luftleitzylinder 7 eingesetzt, der bei 8 stirnseitig gegen das Mantelrohr 4 abgedichtet ist und mit diesem einen Ringraum begrenzt, welcher durch eine aus hoch hitzebeständigem Stahl hergestellte zylindrische Wand 9 in zwei Ringkammern 10, 11 unterteilt ist. Die zylindrische Wand 9 ist bei 12 gasdicht mit dem Zylindermantel 4 verbunden, ihre Ringkammer 11 steht mit einer seitlich abgehenden Abgas-Absaugleitung 13 in Verbindung. Außerdem trägt die zylindrische Wand 9 durchgehende, in die beiden Ringkammern 10, 11 ragende Wärmetauscherrippen 14, die gemeinsam mit den dazwischenliegenden Wandungsteilen einen guten Wärmeübergang zwischen den die beiden Ringkammern 10, 11 durchströmenden Medien ergeben.

Die zylindrische Wand 9 bildet zusammen mit dem Mantelrohr 4 und dem Luftleitzylinder 7 einen rohrförmigen Rippen-Rekuperator, dessen von dem Luftleitzylinder 7 umschlossener Raum 15 eine koaxiale Brennstoffzufuhrleitung 16 aufnimmt, die endseitig in einem gasdicht mit dem Mantelrohr 4 und dem Luftleitzylinder 7 verbundenen Deckel 160 verankert ist, der eine in das Brennstoffzufuhrrohr 16 mündende Brennstoffzufuhrleitung 17 enthält. Die koaxial in dem Brennstoffzufuhrrohr 16 angeordnete Zündelektrode ist bei 18 angedeutet.

Koaxial zu dem Mantelrohr 4 und dem Luftleitzylinder 7 ist im axialen Abstand 19 eine im wesentlichen topfförmige keramische Brennkammer 20 angeordnet, die aus einem dünnwandigen, hochtemperaturfesten Keramikmantel besteht und deren Wandstärke beispielsweise bei 6 mm liegt. Die Brennkammer 20 weist einen im wesentlichen zylindrischen Seitenwandungsteil 21 auf, an dem sich in einem Übergangsbereich 22 eine Stirnwand 23 anschließt, die einen düsenförmig eingeschnürten zentrischen Auslaß 24 für die mit hoher Geschwindigkeit aus der Brennkammer 20 austretenden Gase aufweist. Der Luftleitzylinder 7 könnte auch endseitig bis in eine Restluftkammer 42 vorragend vorgezogen sein, die noch erläutert werden wird.

Auf der dem Auslaß 24 gegenüberliegenden Seite ist die Brennkammer 20 durch eine aufgesetzte Keramikplatte 25 verschlossen, die gleichmäßig rings um die Mittelachse verteilt angeordnete Primärlufteinlaßöffnungen 26 aufweist und mitting mit einer Öffnung 27 versehen ist, durch die das Brennstoffzufuhrrohr 16 mit bei 28 angedeuteten Brennstoffauslaßdüsen in das Innere der Brennkammer 20 ragt.

Das Brennstoffzufuhrrohr 16 ist über eine Ringschulter 29 gegen die Keramikplatte 25 abgestützt ; es enthält einen Federbalg 30, der als ein eine elastische Axialkraft auf die Keramikplatte 25 und die Brennkammer 20 ausübendes elastisches Glied wirkt.

Die zylindrische Wand 9 des Rekuperators ist stirnseitig über den bei 31 endenden Luftleitzylinder 7 vorgezogen, und zwar über die axiale Länge der Brennkammer 20. Der vorgezogene Teil ist mit 32 bezeichnet ; er ist endseitig bei 33 nach innen zu eingezogen und mit seiner stirnseitigen Berandung bei 34 an der Brennkammeraußenwandung abgedichtet anliegend ausgebildet. Alternativ könnten die Düsenöffnungen 35 auch unmittelbar im Bereich der Berandung 34 vorgesehen sein, indem diese beispielsweise gezahnt ausgebildet ist. Damit läßt sich ein besonderer Kühleffekt für die Brennkammerwandung erzielen.

Der eingezogene Teil 33 bildet einen einstückig mit der zylindrischen Wand 9 verbundenen ringförmigen Düsenträger, der gleichmäßig um die Längsachse des Brenners verteilt angeordnete Düsenöffnungen 35 enthält, deren Achsen im wesentlichen parallel zu der Brennerlängsachse ausgerichtet sind.

Wie aus den Figuren ersichtlich, kann der durch das Teil 33 gebildete Düsenträger eine im Querschnitt etwa halbkreisförmige oder eine ebene ringscheibenförmige Gestalt aufweisen. In einer nicht dargestellten alternativen Ausführungsform könnte der Düsenträger auch durch eine die Düsenöffnungen 35 enthaltende Ringplatte oder -scheibe gebildet sein, die mit dem vorgezogenen Teil 32 der zylindrischen Wand 9 verbunden, beispielsweise gasdicht verschweißt ist. Grundsätzlich wäre es auch denkbar, diesen Düsenträger als Keramikteil auszubilden und ihn randseitig mit dem vorgezogenen Teil 32 der zylindrischen Wand 9 zu verbinden.

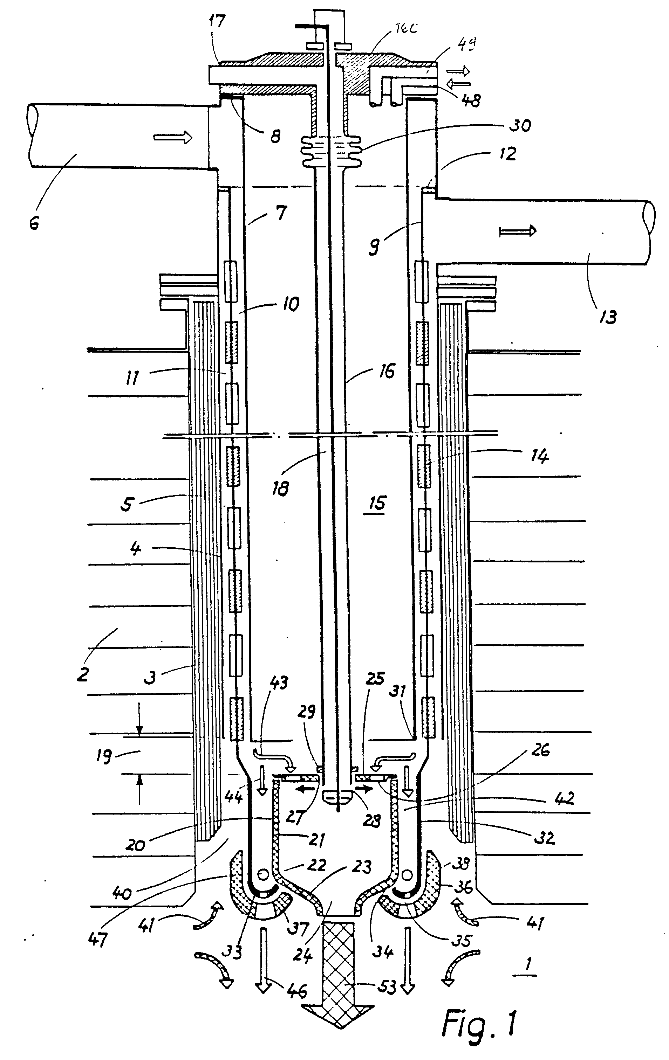

Die Brennkammer 20 ist durch die von dem elastischen Glied 30 ausgeübte Axialkraft gegen die Berandung des als Düsenträger wirkenden eingezogenen Teils 33 abgestützt, wobei in der aus den Fig. 1, 2 und 4 ersichtlichen Weise die Abstützstelle etwa in dem Übergangsbereich 22 zwischen der zylindrischen Wandung 21 und der die eingeschnürte Auslaßöffnung 24 enthaltenden Stirnwand 23 liegt. In diesem « Eckbereich » tritt in der Brennkammer 20 ein Strömungsschatten auf, mit der Folge geringerer örtlicher Temperaturbelastung des Materials der Brennkammer 20. Damit ist auch der eingezogene Teil 33 der aus hoch hitzefestem Stahl bestehenden zylindrischen Wand 9 entsprechend geringer thermisch belastet.

Zu der Ofenkammer 1 hin ist der den Düsenträger bildende eingezogene Teil 33 durch ein seiner Umrißgestalt etwa angepaßtes Strahlungsschutzschild 36 abgeschirmt, das im Abstand zu dem eingezogenen Teil 33 und dem vorgezogenen Teil 32 steht und bei 37 den Bereich der Restluftdüsenöffnungen 35 stirnseitig abdeckt, während ein zylindrisches Wandungsteil 38 eine seitliche Abdeckung des vorgezogenen Teils 32 der zylindrischen Wand 9 über den Übergangsbereich 22 der Brennkammer 20 hinauf bewirkt. Zwischen dem Isolationsmantel 5 und der dem Rekuperator zugewandten Stirnseite des keramischen Strahlungsschutzschildes 36 ist bei 40 ein ringförmiger, gegebenenfalls durch Zwischenstege in eine Reihe diskreter Öffnungen aufgeteilter Abgaseinlaß vorhanden, der mit der Ringkammer 11 des Rekuperators in Verbindung steht und in den bei 41 angedeutetes Agbas aus der Ofenkammer 1 einströmen kann.

Von dem vorgezogenen und dem eingezogenen Teil 32 bzw. 33 der zylindrischen Wand 9 wird zusammen mit der Außenwand der Brennkammer 20 eine ringförmige Restluftkammer 42 begrenzt, die die Brennkammer 20 konzentrisch umgibt und mit der aus der Ringkammer 1 austretenden, in dem Rekuperator vorgewärmten Luft beaufschlagt ist. Die austretende Luftmenge teilt sich in die durch Pfeile 43 angedeutete, über die Einlaßöffnungen 26 in die Brennkammer 20 einströmende Primärluftmenge und die durch Pfeile 44 angedeutete Restluftmenge auf, die durch die Restluftkammer 42 strömt und aus den Düsenöffnungen 35 in Gestalt von Restluftstrahlen austritt, wie dies bei 46 angedeutet ist.

Für den Betrieb in einem Temperaturbereich von höher als 1 100 °C ist eine zusätzliche Kühleinrichtung in der Restluftkammer 42 vorgesehen, die in Gestalt eines Kühlluftringes 47 ausgebildet ist, welcher in der Nähe des Übergangsbereiches 22 und der Düsenöffnungen 35 angeordnet ist. Der Kühlluftring 47 ist über nicht weiter dargestellte, durch den Raum 15 verlaufende Leitungen an eine Kühlluftzufuhrleitung 48 und eine Kühlluftabfuhrleitung 49 angeschlossen ; er kann gegebenenfalls auf die zu kühlenden Teile hin gerichtete Kühlluftaustrittsöffnungen aufweisen.

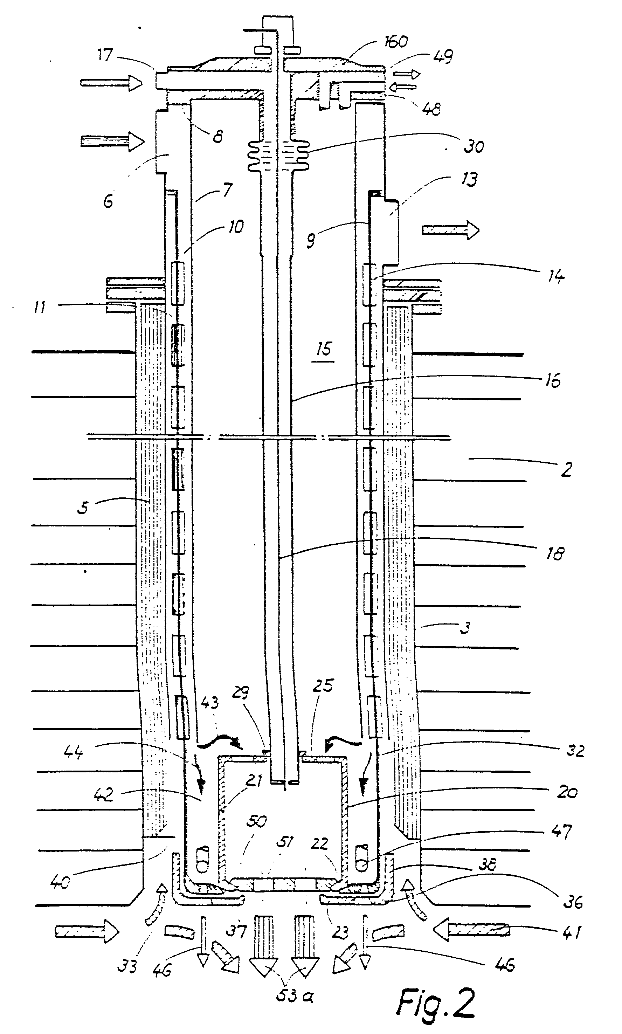

Die Ausführungsform nach Fig. 2 unterscheidet sich von jener nach Fig. 1 lediglich dadurch, daß in die keramische Brennkammer 20 auslaßseitig eine kreisrunde keramische Düsenscheibe 50 eingesetzt ist, die eine Anzahl gleichmäßig verteilt angeordneter zylindrischer Auslaßöffnungen 51 aufweist, durch die der bei der Ausführungsform nach Fig. 1 aus dem Auslaß 24 austretende eine Hauptstrahl 53 in eine Anzahl achsparalleler Hauptstrahlen 53a aufgeteilt wird.

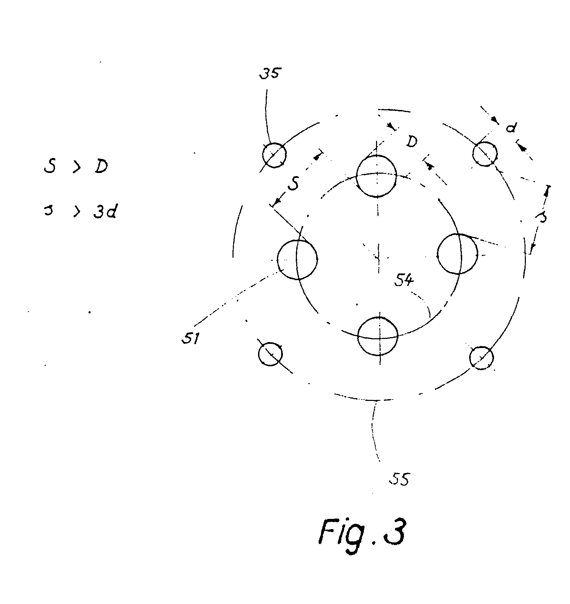

Wie aus Fig. 3 zu ersehen, sind im vorliegenden Falle vier zylindrische Düsenöffnungen 51 vorgesehen, die mit ihren Mittelpunkten auf einem gedachten konzentrischen inneren Kreis 54 liegen und die von vier Restluft-Düsenöffnungen 35 kleineren Durchmessers umgeben sind, deren Mittelpunkte auf einem gedachten Kreis 55 angeordnet sind. Die jeweils gleichmäßig verteilten Düsenöffnungen 35 und Auslaßöffnungen 51 sind gegeneinander versetzt und symmetrisch zueinander angeordnet.

Die Anordnung ist nunmehr derart getroffen, daß der mit S bezeichnete kleinste Randabstand benachbarter Auslaßöffnungen 51 größer als der Durchmesser D dieser Auslaßöffnungen ist, während der kleinste Randabstand s zwischen einer Düsenöffnung 35 und einer benachbarten Auslaßöffnung 51 größer ist als das Dreifache des Düsenöffnungsdurchmessers d.

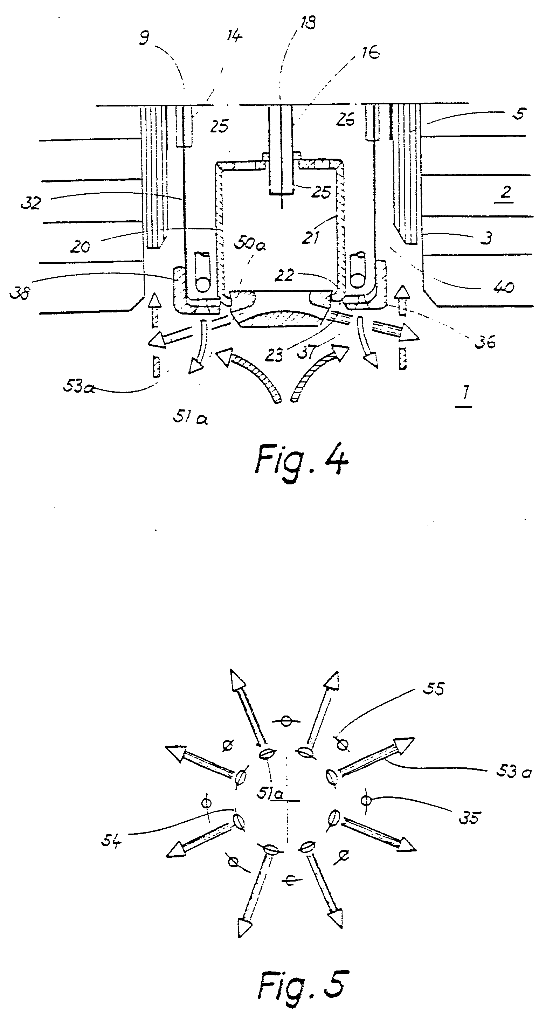

Bei der Ausführungsform nach Fig. 4 ist die Düsenscheibe 50 nach Fig. 2 durch eine Düsenscheibe 50a ersetzt, deren Düsenöffnungen 51a auf einem Kegelmantel liegend radial schräg nach unten außen gerichtet sind, wie dies einem sogenannten Wandstrahlbrenner entspricht.

Aus Fig. 5 ist zu ersehen, daß die Restluft führenden Düsenöffnungen 35 wiederum mit ihren Mittelpunkten auf dem Kreis 55 liegen und symmetrisch versetzt zu den Auslaßöffnungen 51a angeordnet sind, welche ihrerseits ebenfalls wieder gleichmäßig verteilt mit ihren Mittelpunkten auf dem gemeinsamen Kreis 54 liegend angeordnet sind. Die Achsen der Restluft-Düsenöffnungen 35 verlaufen somit quer zu den Achsen der aus den Auslaßöffnungen 51a austretenden Gasstrahlen.

Die Düsenscheibe 50 bzw. 50a ist randseitig in der aus den Fig. 2, 4 ersichtlichen Weise auf die Stirnwand 23 der Brennkammer 20 aufgesetzt, so daß sie eine gewisse radiale Beweglichkeit gegenüber dieser behält.

Der beschriebene Brenner wird im Ein-Ausbetrieb derart betrieben daß an dem Brennkammerauslaß, d. h. an der einzigen eingezogenen Auslaßöffnung 24 der Fig. 1 oder den Auslaßöffnungen 51 und 51a sowie an den Düsenöffnungen 35 eine Gas- bzw. Luftaustrittsgeschwindigkeit in der Größenordnung von 100 bis 150 m/s auftritt, was bedeutet, daß an diesen Öffnungen ein Druckabfall von 1 bis 2, vorzugsweise 1,5 kPa anliegt. Der Anteil der Gesamtdurchtrittsfläche der Restluft-Düsenöffnungen 35 an dem Gesamtquerschnitt der Auslaßöffnung 24 bzw. der Auslaßöffnungen 51, 51a liegt zwischen 10 und 50%, vorzugsweise bei 30 %.

Damit die Flamme stabil brennt, ist es zweckmäßig, das der Innendurchmesser der Brennkammer 20 und deren axiale Länge das Zwei- bis Vierfache, vorzugsweise das Dreifache des Durchmessers der Auslaßöffnung 24 der Ausführungsform nach Fig. 1 betragen.

Ausführungsbeispiel für einen schadstoffarmen Industriebrenner in der Ausführungsform nach Fig. 1 :

Brennerdaten:

| | | | | |
|---|---|---|---|---|
| Brennkammer 20 | Durchmesser: | 60 mm | | |
| | Länge: | 60 mm | | |
| Hauptdüsenöffnung 24 | Durchmesser: | D = 20 mm | $F_1 = 3,14\ cm^2$ | 76% |
| Restluftdüsen 35 | Anzahl: | 8 | $F_2 = 1,00\ cm^2$ | 24% |
| | Durchmesser: | d = 4 mm | | |
| | Abstand: | s = 25 mm | s/d = 6,25 | |
| Beaufschlagung | Erdgas: | 3.5 m3/h | | |
| | Gesamtluft: | 35 m3/h | | |
| Rippenrekuperator mit Wärmeaustauschzahl: | | 0.65 | | |

Bei einer Ofentemperatur von $1000^\circ$ C wurden folgende Werte festgestellt:

| | |
|---|---|
| Luftvorwärmtemperatur: | $750^\circ$ C |
| Abgastemperatur | $420^\circ$ C |

## EP 0 164 576 B1

(Fortsetzung)

```
Druckabfall an den Düsenöff-
nungen 24 und 35:                    1.6 kPa
        Abgaswerte   Sauerstoff:      1.5Vol%
                     Stickoxid:       190 ppm
                     Kohlenmonoxid: <   10 ppm
```

Die Flamme brennt bei den gewählten Brennkammerabmessungen stabil und geräuscharm, auch beim Anfahren von Raumtemperatur, was für den Ein-Aus-Betrieb wichtig ist.

Die Brennkammer aus Si-infiltriertem SiC hielt der Temperaturbeanspruchung stand. Der kegelförmige Dichtsitz an der Stirnseite der Brennkammer ist besonders vorteilhaft angeordnet, weil er die Ausdehnungsunterschiede Keramik-Metall auffängt.

Der Kühlring 47 und die Isolierung für Ofentemperaturen über 1 100 °C senken die Temperatur in den Aus-Phasen des Brenners an den Restluftdüsenöffnungen 35 auf die zulässige Maximaltemperatur von hitzebeständigem Stahl ab (ca. 1 100 °C), wobei nur relativ geringe Verluste entstehen und die Ofenatmospgäre nicht beeinträchtigt wird.

Bei direkter Beheizung wird an jedem Brenner in bekannter Weise über einen Eduktor oder direkt das Abgas abgesaugt.

Der Brenner eignet sich in gleicher Form auch für indirekte Beheizung in sogenannten Mantel-Strahlheizrohren, wobei der hohe Flammenimpuls für die Abgasumwälzung im Strahlrohr ausgenutzt wird (Flammrohr in Mantelstrahlheizrohren vom Brenner abgesetzt oder P-Rohr, W-Rohr ohne Flammenrohr).

**Patentansprüche**

1. Industriebrenner für gasförmige oder flüssige Brennstoffe, insbesondere zur Beheizung von Ofenräumen von Industrieöfen, mit einer keramischen Brennkammer, die mit einer Brennstoff- und einer Primärzuluftzuführung versehen und zur unvollständigen Verbrennung des Brennstoffes mit der Primärluft eingerichtet sowie mit einem düsenförmig eingeschnürten Auslaß für die mit hoher Geschwindigkeit austretenden Gase ausgebildet ist, und mit einer die Brennkammer umgebenden, die zur Restverbrennung erforderliche, vorgewärmte Restluftmenge führenden Restluftkammer, aus deren rings um den Auslaß der Brennkammer angeordneten Düsenöffnungen Restluftstrahlen mit hoher Geschwindigkeit austreten, dadurch gekennzeichnet, daß eine zu der Brennkammer (20) koaxiale zylindrische Wand (9) über wenigstens einen Teil der axialen Länge der Brennkammer (20) vorgezogen ist, und durch diese Wand (9) gemeinsam mit der Seitenwand der Brennkammer (20) die Restluftkammer (42) seitlich begrenzt ist, daß die Restluftkammer (42) stirnseitig durch einen mit der zylindrischen Wand (9) verbundenen ringförmigen Düsenträger (33) abgeschlossen ist, gegen den die Brennkammer (20) außen stirnseitig abgestützt ist und in dem die Düsenöffnungen (35) für die Restluftstrahlen (46) angeordnet sind, und daß die Brennkammer (20) in Achsrichtung gegen den Düsenträger (33) mit einer elastischen Kraft verspannt ist.

2. Industriebrenner nach Anspruch 1, dadurch gekennzeichnet, daß die zylindrische Wand (9) Teil eines rohrförmigen Rekuperators (4, 7, 9) ist, der zwei im Gegenstrom von Verbrennungsabgasen und der Verbrennungsluft durchströmte koaxiale Ringkammern (10, 11) aufweist, die durch die wärmetauschende zylindrische Wand (9) voneinander getrennt sind.

3. Industriebrenner nach Anspruch 1 oder 2, dadurch gekennzeichnet, daß die Brennkammer (20) über ein auf ihr abgestütztes Brennstoffzufuhrrohr (16) gegen den Düsenträger (33) angepreßt ist, und daß das Brennstoffzufuhrrohr (16) über ein elastisches Glied (30) in Achsrichtung belastet ist.

4. Industriebrenner nach einem der vorhergehenden Ansprüche, dadurch gekennzeichnet, daß die Brennkammer (20) eine im wesentlichen flache, den Auslaß (24 ; 51, 51a) enthaltende Stirnwand (23, 50) aufweist, die sich an eine zylindrische Seitenwand (21) anschließt.

5. Industriebrenner nach Anspruch 4, dadurch gekennzeichnet, daß die Brennkammer (20) gegen den Düsenträger (33) im Bereiche des Überganges (22) von der zylindrischen Seitenwand (21) zur Stirnwand abgestützt ist.

6. Industriebrenner nach einem der vorhergehenden Ansprüche, dadurch gekennzeichnet, daß die Brennkammer (20) als ein einstückiges, aus dünnwandiger Hochtemperaturkeramik bestehendes Teil ausgebildet ist.

7. Industriebrenner nach Anspruch 6, dadurch gekennzeichnet, daß die Brennkammer (20) austauschbar in die zylindrische Wand (9) eingesetzt ist.

8. Industriebrenner nach Anspruch 3, dadurch gekennzeichnet, daß das Brennstoffzufuhrrohr (16) an dem dem Auslaß (24) gegenüberliegenden Boden der Brennkammer (20) abgestützt ist, welcher um deren Längsachse herum gleichmäßig verteilt angeordnete Primärlufteinlaßöffnungen (26) aufweist, deren Gesamtdurchtrittsfläche wesentlich größer ist als die Gesamtdurchtrittsfläche des Auslasses (24).

9. Industriebrenner nach Anspruch 4, dadurch gekennzeichnet, daß der Auslaß der Brennkammer

7

(20) durch eine Anzahl gleichmäßig verteilt angeordneter Auslaßöffnungen (51, 51a) gebildet ist, und daß der kleinste Randabstand (S) benachbarter Auslaßöffnungen (51, 51a) größer als die lichte Weite (D) dieser Öffnungen ist.

10. Industriebrenner nach Anspruch 9, dadurch gekennzeichnet, daß die Auslaßöffnungen (51, 51a) der Brennkammer (20) und die Düsenöffnungen (35) der Restluftkammer (42) mit ihren Mittelpunkten auf konzentrischen Kreisen (54, 55) liegen und der kleinste Randabstand (s) einer Düsenöffnung (35) zu der benachbarten Auslaßöffnung (51, 51a) mehr als das Dreifache der lichten Weite (d) der Düsenöffnung (35) beträgt.

11. Industriebrenner nach Anspruch 9 oder 10, dadurch gekennzeichnet, daß die die Auslaßöffnungen (51, 51a) enthaltende Stirnwand als Keramikplatte (50, 50a) ausgebildet ist, die zentrisch in die Brennkammer (20) eingesetzt ist.

12. Industriebrenner nach einem der Ansprüche 9 bis 11, dadurch gekennzeichnet, daß die Auslaßöffnungen (51) und die Düsenöffnungen (35) jeweils im wesentlichen achsparallel angeordnet sind.

13. Industriebrenner nach einem der Ansprüche 9 bis 11, dadurch gekennzeichnet, daß die Auslaßöffnungen (51a) radial schräg nach außen weisend ausgerichtet sind.

14. Industriebrenner nach Anspruch 13, dadurch gekennzeichnet, daß die Düsenöffnungen (35) mit ihren Achsen quer zu den Achsen der Auslaßöffnungen (51a) verlaufend angeordnet sind.

15. Industriebrenner nach einem der vorhergehenden Ansprüche, dadurch gekennzeichnet, daß in der Restluftkammer (42) nahe dem Düsenträger (33) eine Kühleinrichtung, beispielsweise in Gestalt eines von Kühlluft durchströmten Kühlluftkanales (47) angeordnet ist.

16. Industriebrenner nach einem der vorhergehenden Ansprüche, dadurch gekennzeichnet, daß. er ein wenigstens den Düsenträger (33) stirnseitig abdeckendes keramisches Strahlungsschild (36) aufweist, das mit Öffnungen zum Durchtritt der Restluftstrahlen versehen ist.

17. Industriebrenner nach einem der vorhergehenden Ansprüche, dadurch gekennzeichnet, daß an dem Auslaß (24) der Brennkammer (20) und an den Düsenöffnungen (35) der Restluftkammer (42) ein Mindestdruckgefälle von 1 kPa aufrechterhalten ist.

18. Industriebrenner nach einem der vorhergehenden Ansprüche, dadurch gekennzeichnet, daß die Düsenöffnungen (35) unmittelbar in dem Abstützbereich (bei 34) der Brennkammer (20) gegen den Düsenträger (33) ausgebildet sind.

## Claims

1. An industrial burner for gases or liquid fuels, more particularly for heating furnace chambers of industrial furnaces, having a ceramic combustion chamber which has a fuel and primary air supply, is adapted to the incomplete combustion of the fuel with the primary air, and is constructed with a nozzle-shaped waisted outlet for the gases emerging at high velocity, the burner also having a residual air chamber which encloses the combustion chamber and carries the quantity of preheated residual air required for residual combustion and from whose nozzle apertures, arranged surrounding the outlet of the combustion chamber, residual air jets emerge at high velocity, characterized in that a cylindrical wall (9) coaxial with the combustion chamber (20) is taken forward over at least a portion of the axial length of the combustion chamber (20), the residual air chamber (42) being laterally bounded by such wall (9) in cooperation with the side wall of the combustion chamber (20) ; the residual air chamber (42) is closed at its end face by an annular nozzle carrier (33) which is connected to the cylindrical wall (9) and against which the combustion chamber (20) is borne on the outside at the end face and which is formed with the nozzle apertures (35) for the residual air jets (46) ; and the combustion chamber (20) is tensioned against the nozzle carrier (33) by a resilient force in the axial direction.

2. An industrial burner according to claim 1, characterized in that the cylindrical wall (9) forms part of a tubular recuperator (4, 7, 9) having two coaxial annular chambers (10, 11) through which combustion waste gases and the combustion air flow in countercurrent and which are separated from one another by the cylindrical heat-exchanging wall (9).

3. An industrial burner according to claims 1 or 2, characterized in that the combustion chamber (20) is pressed against the nozzle carrier (33) via a fuel supply pipe (16) bearing against the combustion chamber (20), and the fuel supply pipe (16) is loaded via a resilient member (30) in the axial direction.

4. An industrial burner according to any of the preceding claims, characterized in that the combustion chamber (20) has a substantially flat end wall (23, 50) which contains the outlet (24, 51, 51a) and is adjoined by a cylindrical side wall (21).

5. An industrial burner according to claim 4, characterized in that the combustion chamber (20) bears against the nozzle carrier (33) in the zone of the transition (22) between the cylindrical side wall (21) and the end wall.

6. An industrial burner according to any of the preceding claims, characterized in that the combustion chamber (20) is constructed in the form of a one-piece member made of thin-walled high temperature ceramics.

7. An industrial burner according to claim 6, characterized in that the combustion chamber (20) is inserted interchangeably in the cylindrical wall (9).

8. An industrial burner according to claim 3, characterized in that the fuel supply pipe (16) bears against the end of the combustion chamber (20) opposite the outlet (24), such end being formed with primary air inlet apertures (26) which are disposed uniformly distributed around the longitudinal axis of the combustion chamber (20) and whose total orifice area is substantially larger than the total orifice area of the outlet (24).

9. An industrial burner according to claim 4, characterized in that the outlet of the combustion chamber (20) is formed by a number of uniformly distributed outlet apertures (51, 51a), and the minimum edge spacing (S) of adjacent outlet apertures (51, 51a) is larger than the clear width (D) of such apertures.

10. An industrial burner according to claim 9, characterized in that the outlet apertures (51, 51a) of the combustion chamber (20) and the nozzle apertures (35) of the residual air chamber (42) lie with their centres on concentric circles (54, 55) and the minimum edge spacing (s) between a nozzle aperture (35) and the adjacent outlet aperture (51, 51a) is more than three times the clear width (d) of the nozzle aperture (35).

11. An industrial burner according to claims 9 or 10, characterized in that the end wall formed with the outlet apertures (51, 51a) takes the form of a ceramic plate (50, 50a) which is inserted centrally in the combustion chamber (20).

12. An industrial burner according to any of claims 9 to 11, characterized in that the outlet apertures (51) and the nozzle apertures (35) are each disposed substantially axis-parallel.

13. An industrial burner according to any of claims 9 to 11, characterized in that the outlet apertures (51a) are aligned pointing radially at an inclination outwards.

14. An industrial burner according to claim 13, characterized in that the nozzle apertures (35) are arranged with their axes extending transversely of the axes of the outlet apertures (51a).

15. An industrial burner according to any of the preceding claims, characterized in that a cooling device taking the form, for example, of a cooling air duct (47) through which cooling air flows is disposed in the residual air chamber (42) adjacent the nozzle carrier (33).

16. An industrial burner according to any of the preceding claims, characterized in that it has a ceramic jet plate (36) which covers at least the nozzle carrier (33) at the end face and is formed with apertures for the passage of the residual air jets.

17. An industrial burner according to any of the preceding claims, characterized in that a minimum pressure gradient of 1 kPa is maintained at the outlet (24) of the combustion chamber (20) and at the nozzle apertures (35) of the residual air chamber (42).

18. An industrial burner according to any of the preceding claims, characterized in that the nozzle apertures (35) are formed directly in the zone (at 34) where the combustion chamber (20) bears against the nozzle carrier (33).

**Revendications**

1. Brûleur industriel pour combustibles gazeux ou liquides destiné notamment au chauffage de chambres de fours industriels, comprenant une chambre de combustion en céramique qui est pourvue d'une amenée de combustible et d'une amenée d'air primaire et conçue pour la combustion incomplète du combustible avec l'air primaire et réalisée avec une sortie rétrécie en forme de tuyère pour les gaz sortant avec une vitesse élevée, et une chambre d'air résiduel qui entoure la chambre de combustion et guide la quantité d'air résiduel préchauffé nécessaire à la combustion résiduelle, des jets d'air résiduel sortant avec une vitesse élevée des orifices de tuyères de ladite chambre d'air résiduel disposés autour de la sortie de la chambre de combustion, caractérise en ce qu'une paroi cylindrique (9) coaxiale par rapport à la chambre de combustion (20) avance sur au moins une partie de la longueur axiale de la chambre de combustion (20) et la chambre (42) d'air résiduel est délimitée latéralement par cette paroi (9) et la paroi latérale de la chambre de combustion (20), que la chambre (42) d'air résiduel est fermée côté frontal par un support de tuyères (33) annulaire relié à la paroi cylindrique (9), contre lequel la chambre de combustion (20) porte extérieurement côté frontal et dans lequel sont disposés les orifices de tuyères (35) pour les jets d'air résiduel (46), et que la chambre de combustion (20) est appuyée dans le sens axial contre le support de tuyères (33) avec une force élastique.

2. Brûleur industriel selon la revendication 1, caractérise en ce que la paroi cylindrique (9) fait partie d'un récupérateur (4, 7, 9) tubulaire qui possède deux chambres annulaires (10, 11) coaxiales qui sont parcourues à contre-courant par des gaz de combustion et de l'air de combustion et sont séparées l'une de l'autre par la paroi cylindrique (9) d'échange de chaleur.

3. Brûleur industriel selon la revendication 1 ou 2, caractérise en ce que la chambre de combustion (20) est pressée contre le support de tuyères (33) par un tube (16) d'amenée de combustible en appui sur ladite chambre de combustion, et que ledit tube (16) d'amenée de combustible est sollicité dans le sens axial par un organe élastique (30).

4. Brûleur industriel selon l'une quelconque des revendications précédentes, caractérise en ce que la chambre de combustion (20) possède une paroi frontale (23, 50) sensiblement plate qui comporte la sortie (24 ; 51, 51a) et se raccorde à une paroi latérale (21) cylindrique.

9

5. Brûleur industriel selon la revendication 4, caractérisé en ce que la chambre de combustion (20) porte contre le support de tuyères (33) dans la zone de raccordement (22) entre la paroi latérale (21) cylindrique et la paroi frontale.

6. Brûleur industriel selon l'une quelconque des revendications précédentes, caractérisé en ce que la chambre de combustion (20) est réalisée d'une seule pièce à partir d'une céramique à haute résistance thermique à paroi mince.

7. Brûleur industriel selon la revendication 6, caractérisé en ce que la chambre de combustion (20) est insérée de façon échangeable dans la paroi cylindrique (9).

8. Brûleur industriel selon la revendication 3, caractérisé en ce que le tube (16) d'amenée de combustible est en appui contre le fond de la chambre de combustion (20) opposé à la sortie (24) et possédant des orifices d'admission (26) d'air primaire qui sont répartis régulièrement autour de l'axe longitudinal de ladite chambre de combustion et dont la section de passage totale est sensiblement supérieure à la section de passage totale de la sortie (24).

9. Brûleur industriel selon la revendication 4, caractérisé en ce que la sortie de la chambre de combustion (20) est formée par un certain nombre d'orifices de sortie (51, 51a) régulièrement répartis, et que la plus petite distance (S) entre les bords d'orifices de sortie (51, 51a) voisins est supérieur au diamètre (D) de ces orifices.

10. Brûleur industriel selon la revendication 9, caractérisé en ce que les centres des orifices de sortie (51, 51a) de la chambre de combustion (20) et des orifices de tuyères (35) de la chambre (42) d'air résiduel se trouvent sur des cercles concentriques (54, 55) et la plus petite distance (s) entre le bord d'un orifice de tuyère (35) et le bord de l'orifice de sortie (51, 51a) voisin est supérieure au triple du diamètre (d) de l'orifice de tuyère (35).

11. Brûleur industriel selon la revendication 9 ou 10, caractérisé en ce que la paroi frontale comportant les orifices de sortie (51, 51a) est réalisée comme plaque céramique (50, 50a) qui est montée en position centrée dans la chambre de combustion (20).

12. Brûleur industriel selon l'une quelconque des revendications 9 à 11, caractérisé en ce que les axes des orifices de sortie (51) et des orifices de tuyères (35) sont disposés de façon sensiblement parallèle les uns par rapport aux autres.

13. Brûleur industriel selon l'une quelconque des revendications 9 à 11, caractérisé en ce que les orifices de sortie (51a) sont orientés de façon inclinée radialement vers l'extérieur.

14. Brûleur industriel selon la revendication 13, caractérisé en ce que les axes des orifices de tuyères (35) s'étendent perpendiculairement aux axes des orifices de sortie (51a).

15. Brûleur industriel selon l'une quelconque des revendications précédentes, caractérisé en ce qu'un dispositif de refroidissement, par exemple sous forme d'un canal (47) dans lequel s'écoule de l'air de refroidissement, est disposé dans la chambre (42) d'air résiduel à proximité du support de tuyères (33).

16. Brûleur industriel selon l'une quelconque des revendications précédentes, caractérisé en ce qu'il possède un bouclier de rayonnement (36) en céramique qui recouvre au moins le support de tuyères (33) du côté frontal et est pourvu d'orifices pour le passage des jets d'air résiduel.

17. Brûleur industriel selon l'une quelconque des revendications précédentes, caractérisé en ce qu'une différence minimale de pression de 1 kPa est entretenue à la sortie (24) de la chambre de combustion (20) et aux orifices de tuyères (35) de la chambre (42) d'air résiduel.

18. Brûleur industriel selon l'une quelconque des revendications précédentes, caractérisé en ce que les orifices de tuyères (35) sont ménagés directement dans la zone d'appui (en 34) de la chambre de combustion (20) sur le support de tuyères (33).

*Fig. 1*

Fig.2

$S > D$

$\circlearrowright > 3d$

Fig. 3

Fig. 4

Fig. 5

4